Europäisches Patentamt

European Patent Office

Office européen des brevets

(11) Veröffentlichungsnummer: **0 443 137 A2**

# EUROPÄISCHE PATENTANMELDUNG

(21) Anmeldenummer: 90124177.8

(22) Anmeldetag: 14.12.90

(51) Int. Cl.5: **G01B 11/02**, G01B 11/04

(30) Priorität: 18.01.90 DE 4001298

(43) Veröffentlichungstag der Anmeldung:
28.08.91 Patentblatt 91/35

(84) Benannte Vertragsstaaten:
**ES FR NL SE**

(71) Anmelder: **NORDISCHER MASCHINENBAU RUD. BAADER GMBH + CO KG**
**Geniner Strasse 249**
**W-2400 Lübeck(DE)**

(72) Erfinder: **Federau, Gregor**
**Eichenstrasse 86**
**W-2000 Hamburg 20(DE)**
Erfinder: **Holzhüter, Andreas**
**Charlottenstrasse 10**
**W-2400 Lübeck(DE)**

(54) Verfahren zur dreidimensionalen lichtoptischen Vermessung von Objekten und Vorrichtung zur Durchführung des Verfahrens.

(57) Es wird ein Verfahren zum dreidimensionalen Vermessen von bewegten Objekten, beispielsweise von Fischfilets beschrieben. Das nach der Triangulationsmethode arbeitende Verfahren hat eine Vermessung einer Objektoberfläche durch zeilenweise lichtoptische Abtastung mittels auf diese gerichteter Lichtstrahlen zur Grundlage, wobei die Tastzeilen quer zu der Fortschrittsrichtung des Objekts verlaufen. Jede Tastzeile besteht aus einzelnen Lichtpunkten und wird in eine Zeilengruppe aus einer Anzahl K von auf das Objekt bezogen nebeneinander verlaufend sich ausbildenden Tastzeilen aufgefächert, wobei die Lichtpunkte der jeweils nacheinander gebildeten Tastzeilen jeder Zeilengruppe um den K-ten Teil ihres Abstandes in einer Tastzeile versetzt sind. Die Lichtpunkte werden durch Einzel-Lichtquellen erzeugt, die gruppenweise im Multiplexverfahren aktiviert werden.

Fig. 1

# VERFAHREN ZUR DREIDIMENSIONALEN LICHTOPTISCHEN VERMESSUNG VON OBJEKTEN UND VOR-RICHTUNG ZUR DURCHFÜHRUNG DES VERFAHRENS

Die Erfindung betrifft ein Verfahren zum dreidimensionalen Vermessen von bewegten Objekten, beispielsweise von auf einer ebenen Förderfläche flachliegend geförderten Fischfilets , und beispielsweise zwecks Bestimmung der Volumenverteilung durch Auswertung nach dem Trangulationsverfahren, wobei die Vermessung durch zeilenweise lichtoptische Abtastung der Oberfläche des zu vermessenden Objektes mittels auf diese gerichteter Lichstrahlen erfolgt, deren Auftreffpunkte auf der Objektoberfläche überwacht werden, und wobei die Förderung des zu vermessenden Objekts quer zu der Abtastrichtung vorsichgeht, sowie eine Vorrichtung zur Durchführung des Verfahrens mit einer ebenen Förderfläche zur flachliegenden Aufnahme des zu vermessenden Objekts, einer oberhalb der Förderfläche angeordneten Einrichtung zur Erzeugung von auf das Objekt gerichteten Lichtstrahlen sowie mit einer ebenfalls oberhalb der Förderfläche angebrachten Bilderfassungseinrichtung.

Den bekannten und in Anwendung befindlichen, nach dem Triangulationsverfahren arbeitenden optoelektronischen Meßeinrichtungen für die dreidimensionale Vermessung von Objekten, liegen im wesentlichen drei unterschiedliche Verfahrensweisen zugrunde.

So besteht ein erstes Verfahren im wesentlichen darin, daß in Bewegungsrichtung des Objekts verlaufende Lichtzeilen möglichst geringen gegenseitigen Abstandes von seitlich oben auf das Objekt projeziert werden, deren Bild auf dem Objekt durch eine über der Bewegungsbahn desselben angeordnete Kamera in einem Flächenbild erfaßt wird. Die Auswertung erfolgt aufgrund der von der jeweiligen Höhendimension abhängigen Auslenkung der auf das Objekt projezierten Lichtzeilen.

Nachteilig bei diesem Verfahren ist das relativ grobe Meßraster, was bei Objekten mit stark zerklüfteter Oberfläche zu nicht akzeptablen Ungenauigkeiten in der Objektvermessung führt. Darüberhinaus ist die die Lichtzeilen erzeugende Beleuchtungseinrichtung recht aufwendig.

Nach einem anderen Verfahren wird durch eine über der Bewegungsbahn angeordnete Kamera ebenfalls als Flächenbild eine Lichtzeile erfaßt, die durch eine vor oder hinter dem Bildausschnitt installierte Beleuchtungseinrichtung auf das Objekt projeziert wird. Die Auswertung erfolgt auch hier aufgrund der von der jeweiligen Höhendimension abhängigen Auslenkung der auf das Objekt treffenden Lichtzeile. Dabei werden aufeinanderfolgend Bilder erfaßt, die, durch die Fortschrittbewegung des Objektes bedingt, von der jeweiligen Oberflächenstruktur abhängige Änderungen des Bild-Informationsgehaltes beinhalten, woraus, wie beispielsweise aus der DE-OS 33 19 320 ersichtlich, auf die Oberflächenstruktur rückgeschlossen werden kann.

Die für eine ausreichende Vermessungsgenauigkeit erforderliche Bildrate ist für den vorgesehenen Anwendungsfall aufgrund der benötigten Durchsatzleistungen sehr hoch zu wählen, was bei dem vorstehenden Verfahren einen entsprechenden apparativen Aufwand erforderlich macht. Das gilt auch für die Beleuchtungseinrichtung.

Eine weitere Optimierung wurde schließlich durch ein Meßverfahren erreicht, das von dem erstgenannten Verfahren ausgehend dadurch gekennzeichnet ist, daß die Lichtzeilen dieses Verfahrens quasi "zusammengeschoben" sind, so daß eine quer zu der Fortschrittsbewegung der Förderfläche verlaufende Lichtzeile aus Lichtpunkten entsteht, deren Anzahl derjenigen der Lichtzeilen des erstbeschriebenen Verfahrens entspricht.

Es ermöglicht die Verwendung einer weniger aufwendigen Zeilenkamera und hat den Vorteil des geringeren zu verarbeitenden Informationgehaltes, der eine schnellere Bildfolge und damit ein relativ feines Meßraster in Fortschrittsrichtung des Objektes ermöglicht.

Nachteilig ist bei diesem Verfahren, daß Höhenkomponenten nur relativ kleiner Unterschiede erfaßbar sind, d. h. nur relativ flache Objekte vermessen werden können. Das hat seine Ursache darin, daß die höhenbedingte Verschiebung einzelner Lichtpunkte kleiner als der Abstand zweier benachbarter Lichtpunkte bleiben muß, da sonst eine eindeutige Identifikation und Zuordnung der Lichtpunkte nicht möglich ist. Deshalb wird ein relativ grobes Lichtpunktraster gewählt mit dem Nachteil einer unbefriedigenden Meßpunktdichte in Querrichtung zur Fortschrittsbewegung des Objektes.

Es ist die Aufgabe der vorliegenden Erfindung, ein Verfahren vorzuschlagen, das eine hohe Meßpunktdichte sowohl quer, als auch längs zur Bewegungsrichtung eines zu vermessenden Objektes und damit eine hochgenaue Vermessung eines solchen ermöglicht.

Diese Aufgabe wird erfindungsgemäß dadurch gelöst, daß die Steuerung der Lichtstrahlen derart erfolgt, daß jede Tastzeile aus den auf der Objektoberfläche abgebildeten Lichtpunkten in eine Zeilengruppe aus einer Anzahl K von auf das Objekt bezogen nebeneinander verlaufend sich ausbildenden Tastzeilen aufgefächert wird, wobei die Lichtpunkte der jeweils nacheinander gebildeten Tastzeilen jeder Zeilengruppe jeweils um den K-ten Teil ihres Abstandes in einer Tastzeile versetzt sind.

Zur Durchführung dieses Verfahrens ist eine Vorrichtung geeignet, die dadurch gekennzeichnet ist, daß die Einrichtung zur Erzeugung der Lichtstrahlen aus einer der Anzahl der in jeder Zeilengruppe erzeugten Lichtpunkte entsprechenden Anzahl von Lichtquellen besteht.

Weitere vorteilhafte Modifikationen sind den Unteransprüchen zu entnehmen.

Die Erfindung wird nachstehend anhand eines in der beiliegenden Zeichnung dargestellten Ausführungsbeispiels näher erläutert. Es zeigen

Fig. 1     eine Seitenansicht der erfindungsgemäßen Meßeinrichtung zur Erzeugung der Lichtpunkte auf dem Objekt,

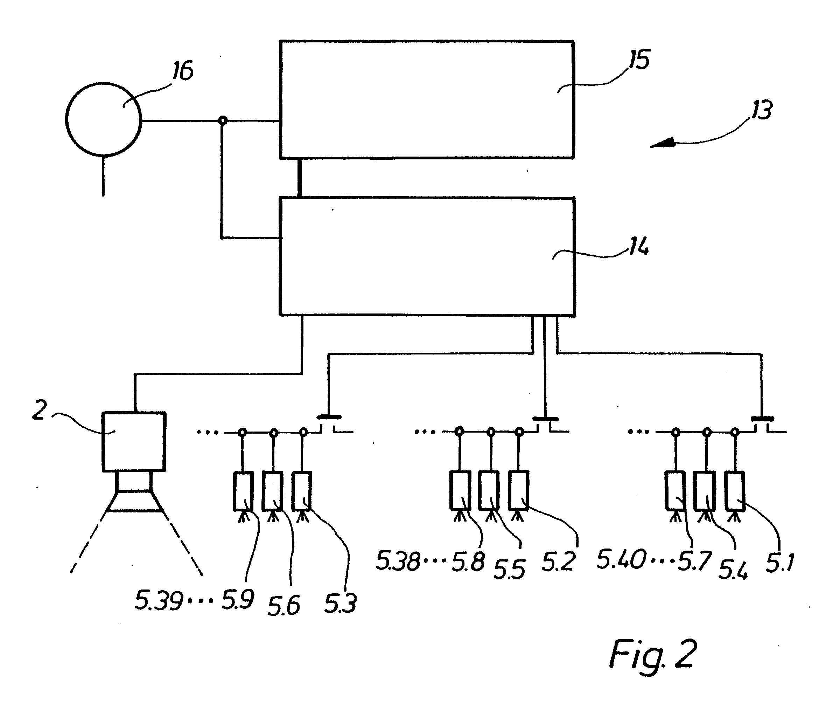

Fig. 2     ein Blockschaltbild der Meßeinrichtung nach Fig. 1.

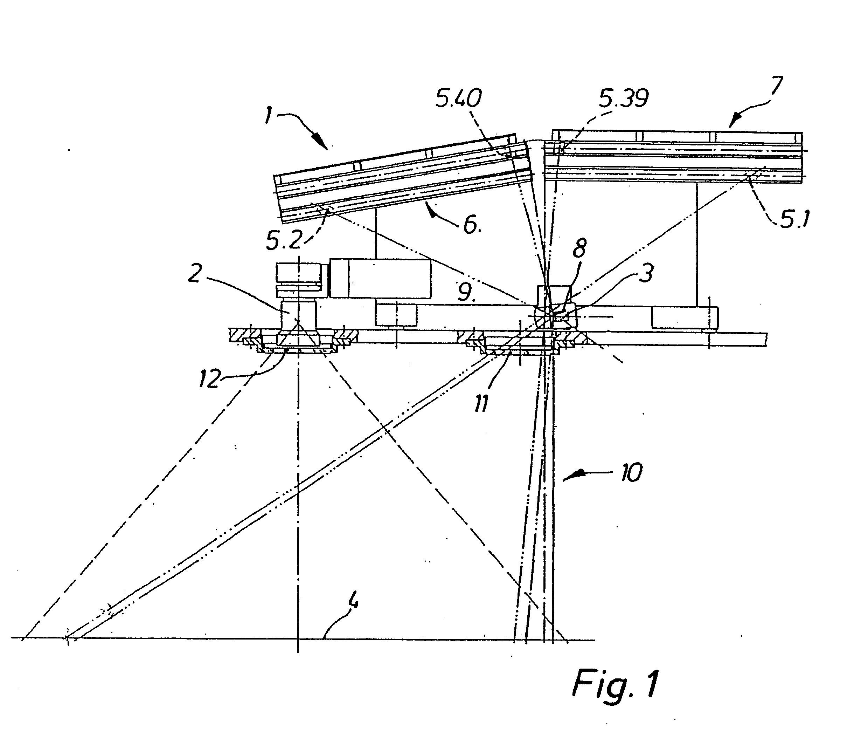

Gemäß Fig. 1 umfaßt die Meßeinrichtung eine vorzugsweise in einem nicht gezeigten Gehäuse hermetisch abgeschlossen montierte Beleuchtungseinrichtung 1 , eine CCD-Kamera 2 und einen gestellfest angebrachten Umlenkspiegel 3 . die Meßeinrichtung ist oberhalb einer die zu vermessenden Objekte, hier im wesentlichen Fischfilets, fachliegend aufnehmenden Förderfläche 4 angeordnet, die durch einen geeigneten Antrieb senkrecht zur Zeichenebene bewegt wird.

Die Beleuchtungseinrichtung 1 besteht im Ausführungsbeispiel aus vierzig Laserdioden 5.1 bis 5.40 mit diesen zugeordneten Kollimatoren. die Laserdioden 5.1 bis 5.40 sind in zwei quer zu der Bewegungsrichtung der Förderfläche 4 nebeneinander angeordneten, jeweils zwanzig Laserdioden 5 umfassenden Gruppen 6 und 7 angebracht, deren jede zwei übereinander angeordnete Reihen umfaßt, die jeweils aus zehn nebeneinander angeordneten Laserdioden 5 gebildet werden. Die Laserdioden 5 sind den beiden Gruppen 6 und 7 derart zugeordnet, daß die Gruppe 6 die gerade bezifferten, die Gruppe 7 die ungeraden bezifferten Laserdioden 5 umfaßt. Die Laserdioden 5 jeder Gruppe 6 und 7 sind so ausgerichtet, daß sich die Strahlen jeweils in einem Fokus 8 bzw. 9 treffen, wobei der Fokus 8 in der Spiegelebene des Umlenkspiegels 3 und der Fokus 9 vor dieser Ebene zu liegen kommt und wobei dafür Sorge getragen ist, daß die Strahlen der in der Gruppe 7 befindlichen Laserdioden 5 an dem Umlenkspiegel 3 freigehen. Letzterer ist so angebracht, daß die Strahlen der Laserdioden 5 aus der Gruppe 6 einen ebenen Strahlenfächer 10 bilden, der sich über die Breite der Förderfläche 4 erstreckt und senkrecht auf diese einfällt, und in den die Strahlen der Laserdioden 5 aus der Gruppe 7 eingegliedert sind.

Die Beleuchtungseinrichtung 1 ist so angebracht, daß die Fokuspunkte 8 und 9 und die Hauptebene der Kameraoptik in einer zu der Förderebene 4 parallelen Ebene und versetzt zueinander ausgerichtet sind.

Dabei ist die CCD-Kamera 2 mit ihrer Sensorzeile in der Ebene des Strahlenfächers der Laserdioden 5 montiert und befindet sich mittig über der Förderfläche 4 . Der Strahlenaustritt aus dem nicht dargestellten Gehäuse und das Sichtfeld der CCD-Kamera 2 sind durch geeignete Glasfenster 11 bzw. 12 freigehalten.

Die Steuerung der Meßeinrichtung erfolgt über eine Steuerlogik 13 mit einem Rechner 14 , der aus den von der CCD-Kamera 2 erfaßten Positionen der Bildpunkte deren zweidimensionale Ortskoordinaten errechnet. Für die Auswertung der Meßwerte und Umsetzung der Ergebnisse ist ein Steuerrechner 15 vorgesehen. Dabei wird der zeitliche Ablauf durch einen mit der Fortschrittsbewegung der Förderfläche 4 synchronisierten Taktgeber 16 bestimmt.

Die Funktion der erfindungsgemäßen Einrichtung ist folgende:
Nach Aktivierung der Meßeinrichtung werden in der mit der Förderfläche 4 zusammenfallenden Meßebene zueinander äquidistante Lichtpunkte erzeugt, die durch einen Strahlenfächer aus zusammen vierzig Lichtstrahlen projiziert werden, die in drei Gruppen aus 1x14 und 2x13 Lichtstrahlen geschaltet werden. Die auf die Meßebene projizierten Lichtpunkte werden in der CCD-Kamera 2 abgebildet, die mit einer Integrationszeit von beispielsweise 3 ms betrieben wird. Nach Ablauf der Integrationszeit wird eine andere der drei Gruppen von Laserdioden 5 eingeschaltet. Dabei umfaßt die erste Gruppe beispielsweise die Laserdioden 5.1, 5.4, 5.7 ... 5.40 (gleich 14 Stück), die zweite Gruppe die Laserdioden 5.2, 5.5. 5.8 ... 5.38 (gleich 13 Stück) und die dritte Gruppe die Laserdioden 5.3, 5.6, 5,9 ... 5.39 (gleich 13 Stück).

Bei Auftreffen der Lichtstrahlen auf die Oberfläche eines auf der Förderfläche 4 aufliegenden Objekts erfolgt eine Verschiebung der Bildpunkte auf der Sensorzeile der CCD-Kamera, wobei die Verschiebung jedes Bildpunktes von der Höhe seines Auftreffpunktes über der Förderfläche 4 abhängt. Die Positionen der Bildpunkte werden durch den Rechner 14 in zweidimensionale Ortskoordinaten umgesetzt, gespeichert und dem Steuerrechner 15 zugeleitet.

Die Berechnung der Höhenwerte des Objekts an den jeweiligen Auftrefforten der Lichtpunkte erfolgt jeweils aus der Position der Lichtpunktabbildung in der CCD-Kamera 2 durch Zugriff auf eingespeicherte Tabellen.

Aus diesen Daten können z. B. die Flächen vertikaler Schnitte durch das vermessene Objekt ermittelt werden, wodurch bei homogenen Objekten bekannter spezifischer Dichte z. B. auch die Masse des Objekts bestimmt werden kannt.

In dem hier vorliegenden Anwendungsfall ist es auf diese Weise möglich, Fischfilets auf vollautomatischem Wege in Portionen gleichen Gewichts aufzuteilen, was beispielsweise durch eine von dem Steuerrechner 17 gesteuerte Schneideinrichtung nach der DE-PS 36 23 002 geschehen kann.

**Patentansprüche**

1. Verfahren zum dreidimensionalen Vermessen von bewegten Objekten , beispielsweise von auf einer ebenen Förderfläche flachliegend geförderten Fischfilets, und beispielsweise zwecks Bestimmung der Volumenverteilung durch Auswertung nach dem Triangulationsverfahren, wobei die Vermessung durch zeilenweise lichtoptische Abtastung der Oberfläche des zu vermessenden Objektes mittels auf diese gerichteter Lichtstrahlen erfolgt, deren Auftreffpunkte auf der Objektoberfläche überwacht werden, und wobei die Förderung des zu vermessenden Objektes quer zu der Abtastrichtung vorsichgeht, **dadurch gekennzeichnet ,** daß die Steuerung der Lichtstrahlen derart erfolgt, daß jede Tastzeile aus den auf der Objektoberfläche abgebildeten Lichtpunkten in eine Zeilengruppe aus einer Anzahl K von auf das Objekt bezogen nebeneinander verlaufend sich ausbildenden Tastzeilen aufgefächert wird, wobei die Lichtpunkte der jeweils nacheinander gebildeten Tastzeilen jeder Zeilengruppe jeweils um den K-ten Teil ihres Abstandes in einer Tastzeile versetzt sind.

2. Vorrichtung zur Durchführung des Verfahrens nach Anspruch 1 , mit einer ebenen Förderfläche zur flachliegenden Aufnahme des zu vermessenden Objekts, einer oberhalb der Förderfläche angeordneten Einrichtung zur Erzeugung von auf das Objekt gerichteten Lichtstrahlen sowie mit einer ebenfalls oberhalb der Förderfläche angebrachten Bilderfassungseinrichtung, **dadurch gekennzeichnet ,** daß die Einrichtung (1) zur Erzeugung der Lichtstrahlen aus einer der Anzahl der in jeder Zeilengruppe erzeugten Lichtpunkte entsprechenden Anzahl von Lichtquellen (5) besteht.

3. Vorrichtung nach Anspruch 2 , **dadurch gekennzeichnet ,** daß die Lichtquellen (5) einen in einer zu der Förderfläche (4) und zu deren Förderbewegung senkrechten Fläche sich erstreckenden Strahlenfächer erzeugen.

4. Vorrichtung nach Anspruch 2 , **dadurch gekennzeichnet ,** daß jede Lichtquelle als intermittierend aktivierbare Laserdiode ausgebildet ist.

5. Vorrichtung nach einem der Ansprüche 2 bis 4, **dadurch gekennzeichnet ,** daß die Lichtquellen (5) gruppenweise im Multiplexverfahren aktiviert werden.

Fig. 1

EP 0 443 137 A2

EP 0 443 137 A2

*Fig. 2*